(19) Europäisches Patentamt
European Patent Office
Office européen des brevets

(11) EP 4 729 590 A1

(12) EUROPEAN PATENT APPLICATION
published in accordance with Art. 153(4) EPC

(43) Date of publication:
**22.04.2026 Bulletin 2026/17**

(21) Application number: **24823340.5**

(22) Date of filing: **10.06.2024**

(51) International Patent Classification (IPC):
***C09K 3/10*** (2006.01) ***C08F 2/50*** (2006.01)
***C08F 290/04*** (2006.01) ***C08F 290/06*** (2006.01)
***F16J 15/10*** (2006.01)

(52) Cooperative Patent Classification (CPC):
**C08F 2/50; C08F 290/04; C08F 290/06; C09K 3/10; F16J 15/10;** Y02E 60/50

(86) International application number:
**PCT/JP2024/021043**

(87) International publication number:
**WO 2024/257724 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.06.2023 JP 2023097316**
**08.12.2023 JP 2023207953**

(71) Applicant: **Toagosei Co., Ltd.**
**Minato-ku**
**Tokyo 105-8419 (JP)**

(72) Inventors:
- **YOSHIDA, Kota**
  **Tokyo 105-8419 (JP)**
- **INATA, Kazumasa**
  **Tokyo 105-8419 (JP)**

(74) Representative: **Rüger Abel Patentanwälte PartGmbB**
**Webergasse 3**
**73728 Esslingen a. N. (DE)**

# (54) SEALING MATERIAL PRODUCTION METHOD, AND SEALING MATERIAL

(57) A method of producing a sealing material according to the present disclosure includes the step of irradiating a photocurable resin composition with light (a) including at least one wavelength (I) from 395 nm to 435 nm, and then irradiating the composition with light (b) including at least one wavelength (II) from 200 nm to 385 nm. In the light (a), the irradiation energy in the wavelength range of from 200 nm to 385 nm is equal to or less than 0.2 times the irradiation energy in the wavelength range of from 395 nm to 435 nm. The photocurable resin composition includes a specific component (A), a specific component (B), a specific component (C) and a specific component (D), in specific proportions.

EP 4 729 590 A1

## Description

Technical Field

The present disclosure relates to a method of producing a sealing material, and a sealing material.

Background Art

Conventionally, sealing materials (hereinafter, also referred to as "gaskets") for fixation have been used to give air tightness and liquid tightness to parts such as equipment and piping. So far, solid gaskets have been commonly used as gaskets. A solid gasket is molded using a mold. In recent years, liquid gaskets have become more popular. A liquid gasket is obtained by coating a curable resin composition in the form of a liquid on a sealing surface, using a dispenser or the like, and then curing the composition. The liquid gasket has advantages over the solid gasket, such as the following (i) and (ii):

(i) the liquid gasket can be formed into a shape corresponding to a workpiece to be sealed, because no mold is required for the production; and
(ii) the cost of finishing the sealing surface can be reduced, because the curable resin composition in the form of a liquid penetrates into the sealing surface even when the surface is rough.

Liquid gaskets are mainly classified into FIPGs (formed in-place gaskets) and CIPGs (cured in-place gaskets).
In the case of an FIPG, a curable resin composition in the form of a liquid is coated on a first sealing surface to form a coating of the curable resin composition, and the coating is brought into contact with a second sealing surface, followed by curing the coating, to seal the gap between the first sealing surface and the second sealing surface.
In the case of a CIPG, a curable resin composition in the form of a liquid is coated on a first sealing surface, cured to form a cured product (hereinafter, also simply referred to as "cured product") of the curable resin, and then the cured product is brought into contact with a second sealing surface and a pressure is applied thereto, to seal the gap between the first sealing surface and the second sealing surface.
Therefore, in the FIPG, sealing performance is ensured by the adhesion between the first sealing surface, the second sealing surface, and the cured product interposed therebetween. In the CIPG, the sealing performance is ensured by the adhesion between the first sealing surface and the cured product, and by the elastic force of the cured product. Since the second sealing surface is not adhered to the cured product in the CIPG, the CIPG has an advantage of having a better reworkability over the FIPG.
In the case of the liquid gasket, it is necessary to cure the curable resin composition in the process of assembly. Therefore, the liquid gasket has a risk that it may require a longer cycle time than the solid gasket. However, it is possible to achieve a shorter cycle time, by using a photocurable resin composition which can be cured in a short period of time, as a raw material of the liquid gasket.
Patent Document 1 discloses a photocurable resin composition which can be suitably used as a sealing seal for preventing dust and moisture from entering into the interior of an electronic device (such as a hard disk drive, or a smartphone).
Patent Document 2 discloses a photocurable resin composition which can be suitably used as any of various types of sealing materials in the interior of a fuel cell.
In order to use a cured product as a CIPG, it is necessary that the cured product maintains the sealing performance over a long period of time (namely, it is necessary that the cured product has an excellent sag resistance, and an elastic force which is not lost over a long period of time). A compression set test is known as a method of evaluating the sag resistance. It can be said that the smaller the compression set, the better the sag resistance.
As techniques for decreasing the compression set of a cured product, the following techniques are known, such as, for example: incorporating an acrylic monomer having a propylene glycol skeleton into a photocurable resin composition (Patent Document 3); incorporating a multifunctional photocurable monomer into a photocurable resin composition (Patent Document 4); incorporating a high-molecular-weight styrenic elastomer into a photocurable resin composition (Patent Document 5); and incorporating two kinds of photoradical polymerization initiators into a photocurable resin composition (Patent Document 6), etc.
In many cases, the compression set test is carried out under measurement conditions (compression rate: 25%, temperature: 70°C, and retention time: 22 hours) in which a cured product compressed at a compression rate of 25% is left to stand at 70°C for 22 hours, in accordance with JIS K6262. As described in Patent Document 7, however, there is a case in which a sealing material for a fuel cell is used at a maximum compression rate of 60%.

Patent Document 1: Japanese Patent Application Laid-Open (JP-A) No. 2021-021012
Patent Document 2: JP-A No. 2022-057075

Patent Document 3: JP-A No. 2017-122139
Patent Document 4: JP-A No. 2022-024078
Patent Document 5: WO 2020/137658
Patent Document 6: WO 2016/194870
Patent Document 7: JP-A No. 2005-285537

## SUMMARY OF INVENTION

### Technical Problem

In order to use a cured product of a photocurable resin as a sealing material (particularly for a CIPG) for a fuel cell, it is necessary that the cured product has a low compression set under evaluation conditions more stringent than those defined in JIS K6262. For example, the cured product needs to have a low compression set even when the compression rate is about 50%.
The operating temperature of a polymer electrolyte fuel cell reaches a high temperature close to 100°C. In addition, it is also necessary that the cured product of the photocurable resin has a long service life. Therefore, in the evaluation of durability, the cured product is required to have a low compression set, even after being compressed for a period of time much longer than 22 hours at a temperature much higher than 100°C.
As will be described below, however, a cured product of a conventional photocurable resin had an insufficient performance under such stringent evaluation conditions, from the viewpoints of achieving a low compression set and the like.
Patent Document 3 discloses that the incorporation of an acrylic monomer having a propylene glycol skeleton leads to a decrease in the compression set under 25% compression at 100°C for 72 hours. However, since the propylene glycol skeleton has poor heat resistance, it results in a high compression set in a test at a higher temperature for a longer period of time.
Patent Document 4 discloses that the incorporation of a multifunctional photocurable monomer leads to a decrease in the compression set under 25% compression at 120°C for 100 hours and at 150°C for 100 hours. However, as is pointed out in Patent Document 4, the multifunctional photocurable monomer causes degradation in the stretchability and the flexibility of the resulting cured product. Therefore, the resulting sealing material may fracture under a high compression rate such as a compression rate of 50%, or, in a case in which the part to be sealed has a low rigidity, the part may be deformed during compression due to the elastic force of the sealing material.
Patent Document 5 discloses that the incorporation of a high-molecular-weight styrenic elastomer having a weight average molecular weight of 200,000 or more leads to a decrease in the compression set under 25% compression at 70°C for 22 hours. However, since such a styrenic elastomer flows at a high temperature equal to or higher than the glass transition temperature (100°C) of polystyrene, it results in a high compression set.
Patent Document 6 discloses that the incorporation of two kinds of initiators leads to a decrease in the compression set under 25% compression at 70°C for 22 hours. However, when the inventors of the present disclosure prepared a cured product in accordance with Patent Document 6 and carried out a compression set test under 50% compression at 140°C for 72 hours, the cured product had a high compression set.
Therefore, a method of producing a sealing material is needed, which method is capable of producing a sealing material that shows a low compression set in a compression set test at a high compression rate (compression rate: 50%) and a high temperature (temperature: 140°C) for a long period of time (retention time: 72 hours), by curing for a short period of time (total light irradiation time: 10 seconds or less).
The present disclosure has been made in view of the above-mentioned circumstances.
An object of an embodiment of the present disclosure is to provide a method of producing a sealing material, which method is capable of producing a sealing material that shows a low compression set in a compression set test at a high compression rate and a high temperature for a long period of time, by curing for a short period of time; and a sealing material.

### Solution to Problem

Specific means for achieving the object as described above include the following embodiments.
<1> A method of producing a sealing material, including a step of irradiating a photocurable resin composition with light (a) including at least one wavelength (I) from 395 nm to 435 nm, and then irradiating the composition with light (b) including at least one wavelength (II) from 200 nm to 385 nm,

wherein, in the light (a), an irradiation energy in a wavelength range of from 200 nm to 385 nm is equal to or less than 0.2 times an irradiation energy in a wavelength range of from 395 nm to 435 nm,
wherein the photocurable resin composition contains the following components (A) to (D):

component (A): a polymer having a number average molecular weight of 1,000 or more and having two or more (meth)acryloyl groups,
component (B): a monofunctional (meth)acrylate whose homopolymer has a glass transition temperature (Tg) of 20°C or lower, which has an alkyl group having from 5 to 30 carbon atoms, and which has one (meth) acryloyl group within one molecule,
component (C): a photoradical polymerization initiator having a molar absorption coefficient of 10 L/(mol·cm) or more at the wavelength (I), and
component (D): a photoradical polymerization initiator having a molar absorption coefficient of less than 10 L/(mol·cm) at any wavelength from 395 nm to 435 nm, and having a molar absorption coefficient of 10 L/(mol·cm) or more at the wavelength (II),
and
wherein a content of the component (A) is from 10 parts by mass to 70 parts by mass, a content of the component (B) is from 30 parts by mass to 90 parts by mass, a content of the component (C) is from 0.01 parts by mass to 0.9 parts by mass and a content of the component (D) is from 0.1 parts by mass to 5 parts by mass, with respect to 100 parts by mass of a total amount of the component (A) and the component (B).

<2> The method of producing a sealing material according to <1> described above,

wherein the light (a) has an irradiance of from 100 $mW/cm^2$ to 5,000 $mW/cm^2$, and is irradiated at an irradiation dose of from 100 $mJ/cm^2$ to 5,000 $mJ/cm^2$, and
wherein the light (b) has an irradiance of from 100 $mW/cm^2$ to 5,000 $mW/cm^2$, and is irradiated at an irradiation dose of from 200 $mJ/cm^2$ to 10,000 $mJ/cm^2$.

<3> The method of producing a sealing material according to <1> or <2> described above, wherein the polymer is:

a urethane (meth)acrylate (A-1); or
a (meth)acrylate (A-2) which contains a skeleton containing polyisobutylene, and which does not have a urethane bond.

<4> The method of producing a sealing material according to <3> described above,

wherein the polymer is the urethane (meth)acrylate (A-1), and
wherein the urethane (meth)acrylate (A-1) contains a skeleton consisting of at least one of a hydrogenated polybutadiene or a hydrogenated polyisoprene.

<5> The method of producing a sealing material according to <3> described above, wherein the polymer is the (meth) acrylate (A-2).
<6> The method of producing a sealing material according to any one of <1> to <5> described above, wherein the component (C) includes at least one selected from the group consisting of an acylphosphine oxide compound, an α-aminoalkylphenone compound, an oxime ester compound, and a thioxanthone compound.
<7> The method of producing a sealing material according to any one of <1> to <6> described above, wherein the component (D) includes at least one selected from the group consisting of an α-hydroxyalkylphenone compound, a benzyl ketal compound, and a benzophenone compound.
<8> The method of producing a sealing material according to any one of <1> to <7> described above, wherein the sealing material is used in a fuel cell application.
<9> A sealing material, containing a structural unit derived from the following component (A), and a structural unit derived from the following component (B):

component (A): a polymer having a number average molecular weight of 1,000 or more and having two or more (meth)acryloyl groups, and
component (B): a monofunctional (meth)acrylate whose homopolymer has a glass transition temperature (Tg) of 20°C or lower, which has an alkyl group having from 5 to 30 carbon atoms, and which has one (meth)acryloyl group within one molecule,
wherein the sealing material has a compression set, determined in accordance with JIS K6262: 2013, with the

proviso that a compression rate is changed to 50%, a temperature is changed to 140°C and a retention time is changed to 72 hours, of 35% or less.

<10> The sealing material according to <9> described above, wherein the polymer is:

a urethane (meth)acrylate (A-1); or
a (meth)acrylate (A-2) which contains a skeleton containing polyisobutylene, and which does not have a urethane bond.

Advantageous Effects of Invention

One embodiment of the present disclosure provides a method of producing a sealing material, which method is capable of producing a sealing material that shows a low compression set in a compression set test at a high compression rate and a high temperature for a long period of time, by curing for a short period of time; and a sealing material.

DESCRIPTION OF EMBODIMENTS

In the present disclosure, a numerical range indicated using the expression "from * to *" refers to a range that includes numerical values described before and after the preposition "to" as a lower limit value and an upper limit value, respectively.
In a case in which a plurality of kinds of substances corresponding to each component are present in a composition, in the present disclosure, the amount of each component in the composition refers to the total amount of the plurality of substances present in the composition, unless otherwise specified.
In numerical ranges described in stages, in the present disclosure, the upper limit value or the lower limit value described in one numerical range may be replaced with the upper limit value or the lower limit value in another numerical range described in stages. Further, in a numerical range described in the present disclosure, the upper limit value or the lower limit value of the numerical range may be replaced with a value shown in Examples.
In the present disclosure, a combination of preferred embodiments is a more preferred embodiment.
In the expression of a group (atomic group) in the present disclosure, any expression without the term "substituted" or "unsubstituted" encompasses both a group that does not have a substituent, and a group having a substituent.
In the present disclosure, the term "(meth)acrylate" refers to at least one of acrylate or methacrylate.
In the present disclosure, the term "urethane (meth)acrylate" refers to a (meth)acrylate polymer having a urethane skeleton.

(1) Method of Producing Sealing Material

The method of producing a sealing material according to the present disclosure includes the step (hereinafter, also referred to as "irradiation step") of irradiating a photocurable resin composition with light (a) including at least one wavelength (I) from 395 nm to 435 nm, and then irradiating the composition with light (b) including at least one wavelength (II) from 200 nm to 385 nm. In the light (a), the irradiation energy in the wavelength range of from 200 nm to 385 nm is equal to or less than 0.2 times the irradiation energy in the wavelength range of from 395 nm to 435 nm. The photocurable resin composition contains the following components (A) to (D) (namely, the component (A), component (B), component (C) and component (D) to be described below). The content of the component (A) is from 10 parts by mass to 70 parts by mass, the content of the component (B) is from 30 parts by mass to 90 parts by mass, the content of the component (C) is from 0.01 parts by mass to 0.9 parts by mass and the content of the component (D) is from 0.1 parts by mass to 5 parts by mass, with respect to 100 parts by mass of the total amount of the component (A) and the component (B).

Component (A): a polymer having a number average molecular weight (hereinafter, also referred to as "Mn") of 1,000 or more and having two or more (meth)acryloyl groups
Component (B): a monofunctional (meth)acrylate whose homopolymer has a glass transition temperature (Tg) of 20°C or lower, which has an alkyl group having from 5 to 30 carbon atoms, and which has one (meth)acryloyl group within one molecule
Component (C): a photoradical polymerization initiator having a molar absorption coefficient of 10 L/(mol·cm) or more at the wavelength (I)
Component (D): a photoradical polymerization initiator having a molar absorption coefficient of less than 10 L/(mol·cm) at any wavelength from 395 nm to 435 nm, and having a molar absorption coefficient of 10 L/(mol·cm) or more at the wavelength (II).

The fact that the "the irradiation energy in the wavelength range of from 200 nm to 385 nm is equal to or less than 0.2 times the irradiation energy in the wavelength range of from 395 nm to 435 nm, in the light (a)" indicates that the light (a) may include light in the wavelength range of from 200 nm to 385 nm to the extent that the effect of the present disclosure is not impaired. The light in the wavelength range of from 200 nm to 385 nm which can be included in the light (a) does not allow the curing of the photocurable resin composition to proceed sufficiently. The ratio of the irradiation energy in the wavelength range of from 200 nm to 385 nm to the irradiation energy in the wavelength range of from 395 nm to 435 nm, in the light (a), can be calculated, for example, by measuring the emission spectrum of the light (a) using a spectral irradiance meter.

The term "number average molecular weight" refers to a value obtained by converting the molecular weight measured by gel permeation chromatography (hereinafter, also referred to as "GPC") in terms of polystyrene.

The number average molecular weight (Mn) and the weight average molecular weight (Mw) in terms of polystyrene can be determined by performing a gel permeation chromatography (GPC) measurement under the following measurement conditions.

< Measurement Conditions >

Apparatus: HLC-8320, manufactured by Tosoh Corporation
Columns: TSKgel-SuperMultipore HZ-M (4.6 mm ID × 15 cm) × three columns (for low molecular weight materials, exclusion limit molecular weight: 2,000,000), manufactured by Tosoh Corporation
Column temperature: 40°C
Eluent: tetrahydrofuran (0.35 ml/min)
Detector: RI
Sample concentration: 0.1%

The term "molar absorption coefficient" refers to the value of ε in the following Equation (A). The value of "ε" is determined by the Lambert-Beer equation for an acetonitrile solution containing a photoradical polymerization initiator. In Equation (A), the symbol "I" represents the intensity of transmitted light. The symbol "Io" represents the intensity of the light transmitted through pure acetonitrile solvent. The symbol "c" represents molar concentration (M). The symbol "d" represents the thickness (cm) of a solution layer. The symbol "log (Io/I)" represents absorbance.

$$\text{Equation (A): } \varepsilon = \log (Io/I)/(c \times d)$$

The molar absorption coefficient of the photoradical polymerization initiator can be measured, for example, in accordance with the following method. Using acetonitrile as a solvent, the photoradical polymerization initiator is dissolved in the solvent to a concentration of 1 g/L. Then the absorbance of the resulting solution is measured by an UV-visible spectrophotometer under room temperature conditions, using a quartz cell, and the molar absorption coefficient is calculated using the Lambert-Beer law. For a wavelength having an absorbance of more than 2.0, the photoradical polymerization initiator is dissolved such that the concentration of the resulting solution has an absorbance from 0.1 to 2.0. Then the absorbance of the solution is measured by an UV-visible spectrophotometer under room temperature conditions, using a quartz cell, and the molar absorption coefficient is calculated using the Lambert-Beer law.

Hereinafter, "irradiating light (a) including at least one wavelength (I) from 395 nm to 435 nm" is also referred to as "light irradiation (a)".

Hereinafter, "irradiating light (b) including at least one wavelength (II) from 200 nm to 385 nm" is also referred to as "light irradiation (b)".

Since the method of producing a sealing material according to the present disclosure has the configurations as described above, it is possible to produce a sealing material that shows a low compression set in a compression set test at a high compression rate (compression rate: 50%) and a high temperature (temperature: 140°C) for a long period of time (retention time: 72 hours), by curing for a short period of time (total light irradiation time: 10 seconds or less). Therefore, a sealing material having an excellent reliability and durability can be produced with a high productivity.

It is assumed that this effect is achieved by the following reasons, but not particularly limited thereto. When the photocurable resin composition contains the component (A), a cross-linked structure is formed by performing the irradiation step. This leads to an improvement in the sag resistance of the resulting sealing material. As a result, the compression set of the sealing material at a high temperature is decreased. When the content of the component (A) is less than 10 parts by mass, the effect of incorporating the component (A) becomes insufficient. When the content of the component (A) is more than 70 parts by mass, the compression resistance of the sealing material is deteriorated, to cause

the occurrence of cracks in the sealing material during the compression of the sealing material.

When the photocurable resin composition contains the component (B), the glass transition temperature of the resulting sealing material is decreased, and the sealing material has rubber elasticity at a low temperature (for example, at 0°C). When the monofunctional (meth)acrylate as the component (B) has an alkyl group having 5 or more carbon atoms, the component (B) can be mixed with the component (A), and the hydrolysis resistance of the sealing material is improved.

When the content of the component (C) is 0.01 parts by mass or more, the curing of the photocurable resin composition proceeds by the light irradiation (a). The photocurable resin composition is not sufficiently cured by the light irradiation (a), and the reaction rate of the photocurable resin composition is not yet sufficiently high. Therefore, the curing of the photocurable resin composition is allowed to proceed sufficiently by the subsequent light irradiation (b) (the photocurable resin composition contains the component (D) for this purpose). When the content of the component (C) is 0.9 parts by mass or less, the compression set of the resulting sealing material is decreased.

When the content of the component (D) is 0.1 parts by mass or more, the curing of the photocurable resin composition by the light irradiation (b) proceeds. This allows the curing of the photocurable resin composition to proceed sufficiently, after performing the light irradiation (a). When the content of the component (D) is less than 0.1 parts by mass, the curing of the photocurable resin composition does not proceed sufficiently. When the content of the component (D) is 5 parts by mass or less, the compression set of the resulting sealing material is decreased.

In the present disclosure, the curing of the photocurable resin composition is allowed to proceed partially by the light irradiation (a), and then the curing of the photocurable resin composition is allowed to proceed sufficiently by the light irradiation (b). In this manner, the photocurable resin composition can be cured in a short period of time by performing the irradiation step, even when the contents of the component (C) and the component (D) are low. As a result, the compression set of the resulting sealing material is decreased.

In a case in which only one of the light irradiation (a) or the light irradiation (b) is performed in the irradiation step, it is difficult to achieve both curing the curable resin composition in a short period of time, and decreasing the compression set of the resulting sealing material.

Specifically, in a case in which the contents of the photoradical polymerization initiators (namely, the component (C) and the component (D)) are high, it is possible to allow the curing of the curable resin composition to proceed sufficiently in a short period of time, using light having a high irradiance, but the resulting sealing material has a high compression set.

In a case in which the contents of the photoradical polymerization initiators (namely, the component (C) and the component (D)) are low, and light having a high irradiance is used, all of the photoradical polymerization initiators is consumed before the curing of the curable resin composition proceeds sufficiently. Therefore, the curing of the curable resin composition cannot be allowed to proceed sufficiently in a short period of time. In a case in which the contents of the photoradical polymerization initiators (namely, the component (C) and the component (D)) are low, and light having a low irradiance is used, the compression set of the resulting sealing material is low, but a long period of time is required for curing the curable resin composition.

Based on these reasons, it is assumed that the method of producing a sealing material according to the present disclosure is capable of producing a sealing material that shows a low compression set in a compression set test at a high compression rate and a high temperature for a long period of time, by curing for a short period of time.

The method of producing a sealing material according to the present disclosure may further include the step (hereinafter, also referred to as "preparation step") of preparing a photocurable resin composition, and the step (hereinafter, also referred to as "molding step") of molding the photocurable resin composition in the form of the sealing material to be produced, in addition to the irradiation step. The preparation step, the molding step and the irradiation step are carried out in the order mentioned. A description will be given below of the case in which the method of producing a sealing material according to the present disclosure includes the preparation step, the molding step, and the irradiation step.

(1. 1) Preparation Step

In the preparation step, a photocurable resin composition is prepared.

The method of preparing the photocurable resin composition is not particularly limited, and any known method may be used. The photocurable resin composition may be kneaded using a kneading machine. The kneading machine may be, for example, a kneader, a Banbury mixer, a roll mill, or a single-screw extruder.

(1. 1. 1) Photocurable Resin Composition

The photocurable resin composition contains components (A) to (D) in specific proportions.

(1. 1. 1. 1) Component (A)

The photocurable resin composition contains a component (A). The component (A) is a polymer having an Mn of

1,000 or more and having two or more (meth)acryloyl groups. The component (A) preferably has two (meth)acryloyl groups.

The Mn of the component (A) is 1,000 or more, preferably from 1,000 to 100,000, more preferably 3,000 to 80,000, and still more preferably from 5,000 to 60,000. When the Mn of the component (A) is 1,000 or more, the resulting sealing material has an excellent adhesive force. When the Mn of the component (A) is 100,000 or less, the component (A) has a better solubility in the photocurable resin composition.

The content of the component (A) is from 10 parts by mass to 70 parts by mass with respect to 100 parts by mass of the total amount of the component (A) and the component (B). The content of the component (A) may be from 10 parts by mass to 40 parts by mass, or from 10 parts by mass to 30 parts by mass, depending on the structure of the component (A), such as, for example, in a case in which the component (A) includes a bifunctional urethane (meth)acrylate having a polyether skeleton. The content of the component (A) may be from 30 parts by mass to 70 parts by mass, or from 40 parts by mass to 70 parts by mass, depending on the structure of the component (A), such as, for example, in a case in which the component (A) includes a urethane (meth)acrylate having a polydiene skeleton.

The polymer described above is not particularly limited. However, a (meth)acrylate polymer having a (meth) acryloyl group as a part of the polymer skeleton (particularly, at an end of the polymer skeleton) is particularly preferred. The skeleton of the (meth)acrylate polymer is not particularly limited, and may be, for example, a urethane skeleton (namely, a urethane (meth)acrylate), a hydrocarbon skeleton which does not have a double bond (such as polyisobutylene, a hydrogenated polybutadiene or a hydrogenated polyisoprene), a polyacrylic acid skeleton, a polyether skeleton, a hydrocarbon skeleton having a double bond, a polyester skeleton, or a polycarbonate skeleton.

In particular, the polymer described above is preferably a urethane (meth)acrylate (A-1) (hereinafter, also referred to as "component (A-1)"), or a (meth)acrylate (A-2) (hereinafter, also referred to as "component (A-2)") which contains a skeleton containing polyisobutylene, and which does not have a urethane bond. By this arrangement, the method of producing a sealing material according to the present disclosure is capable of producing a sealing material having a low compression set.

Hereinafter, a urethane (meth)acrylate having two (meth)acryloyl groups is also referred to as "bifunctional urethane (meth)acrylate".

(1. 1. 1. 1. 1) Component (A-1)

As described above, the component (A-1) is a urethane (meth)acrylate (A-1) having an Mn of 1,000 or more and having two or more (meth)acryloyl groups.

The component (A-1) may have a skeleton such as, for example, a hydrocarbon skeleton which does not have a double bond (such as a hydrogenated polybutadiene or a hydrogenated polyisoprene), a polyether skeleton, a hydrocarbon skeleton having a double bond, a polyester skeleton, or a polycarbonate skeleton.

In particular, the component (A-1) preferably contains a hydrocarbon skeleton which does not have a double bond, or a polyether skeleton. When the component (A-1) contains a hydrocarbon skeleton which does not have a double bond, or a polyether skeleton, the resulting sealing material has physical properties (namely, heat resistance, hydrolysis resistance, and rubber elasticity at a low temperature) required for a sealing material for a fuel cell.

The component (A-1) is preferably a urethane acrylate, from the viewpoint that an excellent photocuring rate of the photocurable resin composition can be achieved.

The component (A-1) may be a commercially available product. Examples of the commercially available product of the bifunctional urethane (meth)acrylate having a polyether skeleton include ART RESIN series (such as UN-6200, UN-6207, UN-6306, UN-6304, UN-6305 and UN-6060S), manufactured by Negami Chemical Industrial Co., Ltd. The components (A-1) may include only one kind of such urethane (meth)acrylates, or two or more kinds thereof. For example, when the component (A-1) includes two or more kinds (for example, two kinds, such as UN-6304 and UN-6305) of the bifunctional urethane (meth)acrylates having a polyether skeleton, it is possible to obtain a cured product having an excellent rubber elasticity at a low temperature.

It is preferred that the polymer described above is the urethane (meth)acrylate (A-1), and the urethane (meth) acrylate (A-1) contains a skeleton (hereinafter, also referred to as "polydiene skeleton") consisting of at least one of a hydrogenated polybutadiene or a hydrogenated polyisoprene.

This makes it possible to obtain a cured product having an even better heat resistance and hydrolysis resistance.

A description will be given below of a case in which the component (A-1) contains a polydiene skeleton.

The component (A-1) may be, for example, the following component (A-1-1), or the following component (A-1-2).

· Component (A-1-1): a urethanization reaction product of a polydiene alcohol, a polyisocyanate, and a (meth)acrylate having a hydroxyl group

· Component (A-1-2): an addition reaction product of a compound having an isocyanate group and a (meth)acryloyl group with a polydiene alcohol

A description will be given below of a polydiene diol, a polyisocyanate, as well as a compound containing a hydroxyl group and a (meth)acryloyl group, which are raw material compounds of a preferred component (A-1-1).

The polydiene diol may be, for example, a polybutadiene diol, a polyisoprene diol, or a diol of a butadiene-styrene copolymer. A hydrogenated polydiene diol may be, for example, a hydrogenated polybutadiene diol, a hydrogenated polyisoprene diol, or a hydrogenated product of a diol of a butadiene-styrene copolymer.

Of these, one obtained by hydrogenating a double bond is preferred, because a favorable compression set at a high temperature can be achieved. In particular, a hydrogenated polybutadiene diol or a hydrogenated polyisoprene diol is preferred. A hydrogenated polybutadiene diol and a hydrogenated polyisoprene diol may be used in combination.

The polydiene diol preferably has an Mn of from 500 to 5,000, and more preferably from 1,000 to 4,000.

The polyisocyanate is preferably a compound (hereinafter, also referred to as "diisocyanate") having two isocyanate groups within one molecule. When a compound having three or more isocyanate groups within one molecule is used, gelation may occur during synthesis, or cracks may occur under high compression even in a case in which the component could be synthesized without gelation.

The diisocyanate may be, for example, an aliphatic diisocyanate (such as hexamethylene diisocyanate), an alicyclic diisocyanate (such as isophorone diisocyanate, a hydrogenated tolylene diisocyanate, a hydrogenated diphenylmethane diisocyanate or a hydrogenated xylylene diisocyanate), or an aromatic diisocyanate (such as tolylene diisocyanate, diphenylmethane diisocyanate, tolidine diisocyanate, naphthalene diisocyanate or xylylene diisocyanate).

The compound containing a hydroxyl group and a (meth)acryloyl group may be, for example, 2-hydroxyethyl (meth)acrylate, 2-hydroxypropyl (meth)acrylate, 4-hydroxybutyl (meth)acrylate, a caprolactone-modified product of 2-hydroxyethyl (meth)acrylate, or glycidol di(meth)acrylate.

Of these compounds, the compound containing a hydroxyl group and a (meth)acryloyl group is preferably a hydroxyalkyl (meth)acrylate (such as 2-hydroxyethyl (meth)acrylate, 2-hydroxypropyl (meth)acrylate, or 4-hydroxybutyl (meth)acrylate).

The method of producing a preferred component (A-1-1) may be, for example, Production Method 1 or Production Method 2. Production Method 1 is a method in which the polydiene diol is allowed to react with the diisocyanate to produce a urethane prepolymer having isocyanate groups, and the resulting prepolymer is allowed to react with the compound containing a hydroxyl group and a (meth)acryloyl group. Production Method 2 is a method in which the polydiene diol, the diisocyanate, as well as the compound containing a hydroxyl group and a (meth)acryloyl group are allowed to react with one another.

In the present disclosure, a polydiene-based urethane (meth)acrylate obtained by Production Method 1 is preferred. This makes it easier to control the molecular weight. The polydiene-based urethane (meth)acrylate obtained by Production Method 1 has an excellent solubility with other components. As a result, the resulting composition has an excellent adhesive force.

The molar ratio (polydiene diol: diisocyanate) of the polydiene diol to the diisocyanate in the production of a preferred component (A-1-1) is preferably from 1:2.2 to 1:1.05, more preferably from 1:2 to 1:1.1, and still more preferably from 1:1.8 to 1:1.1. When the component (A-1) is obtained by reacting these compounds at such a ratio, the resulting component (A-1) has an excellent solubility with another (meth)acrylate, and the resulting sealing material has an even better adhesive force.

(1. 1. 1. 1. 2) Component (A-2)

As described above, the component (A-2) is a (meth)acrylate (A-2) which has an Mn of 1,000 or more, which has two or more (meth)acryloyl groups, which contains a skeleton containing polyisobutylene ($-[CH_2C(CH_3)_2]$-unit), and which does not have a urethane bond. The skeleton of the component (A-2) may be consisting of polyisobutylene.

The polymer described above is preferably the (meth)acrylate (A-2). By this arrangement, the method of producing a sealing material according to the present disclosure is capable of producing a sealing material having a compression set lower than that in a case in which the polymer is the component (A-1).

The component (A-2) may be a commercially available product. The commercially available product may be, for example, "KANEKA EPION EP400V" manufactured by Kaneka Corporation.

(1. 1. 1. 2) Component (B)

The photocurable resin composition contains a component (B). The component (B) is a monofunctional (meth) acrylate whose homopolymer has a glass transition temperature (Tg) of 20°C or lower, which has an alkyl group having from 5 to 30 carbon atoms, and which has one (meth)acryloyl group within one molecule.

The glass transition temperature (Tg) of the homopolymer of the component (B) is 20°C or lower, and may be 0°C or lower.

The glass transition temperature (Tg) of the homopolymer of the component (B) can be determined from the

intersection of the baseline, and a tangent line at an inflection point, of a heat flux curve obtained using a differential scanning calorimeter. The glass transition temperature may be measured using the following measurement device, with the measurement condition set as follows.

The heat flux curve is obtained under the condition of heating about 5 mg of a sample to a temperature of 70°C at a rate of 20°C/min, maintaining the temperature for 5 minutes, then cooling the sample to -150°C at a rate of -20°C/min, maintaining the temperature for 5 minutes, and then heating the sample again to 70°C at a rate of 20°C/min.

< Measurement Device and Measurement Condition >

Measurement device: DSC 214 POLYMA, manufactured by NETZSCH Inc.
Measurement atmosphere: under a nitrogen atmosphere

The component (B) may be, for example, an alkyl (meth)acrylate represented by the following Formula (1), or a (meth)acrylate of an ethylene oxide adduct of an alkyl alcohol, represented by the following Formula (2). The component (B) may be used singly, or in an arbitrary combination of two or more kinds thereof.

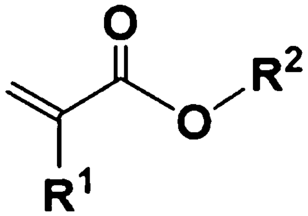

(1)

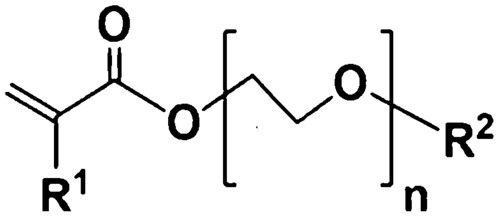

(2)

In each of Formula (1) and Formula (2), $R^1$ represents a hydrogen atom or a methyl group; and $R^2$ represents an alkyl group having from 5 to 30 carbon atoms. In Formula (2), n is an integer from 1 to 4.

Examples of the alkyl group having from 5 to 30 carbon atoms include pentyl group, isopentyl group, tert-pentyl group, neopentyl group, hexyl group, 2-ethylhexyl group, isohexyl group, heptyl group, octyl group, isooctyl group, nonyl group, isononyl group, decyl group, isodecyl group, undecyl group, dodecyl group (lauryl group), and isostearyl group.

The monofunctional (meth)acrylate is preferably a monofunctional acrylate (namely, $R^1$ in Formula (1) is a hydrogen atom), from the viewpoint of achieving an excellent photocuring rate.

The content of the component (B) is from 30 parts by mass to 90 parts by mass with respect to 100 parts by mass of the total amount of the component (A) and the component (B). In a case in which the component (B) is a (meth)acrylate of an ethylene oxide adduct of an alkyl alcohol, represented by Formula (2), the content of the component (B) may be from 70 parts by mass to 90 parts by mass, or from 75 parts by mass to 85 parts by mass. In a case in which the component (B) is an alkyl (meth)acrylate represented by Formula (1), the content of the component (B) may be from 30 parts by mass to 70 parts by mass, or from 40 parts by mass to 60 parts by mass.

(1. 1. 1. 3) Component (C)

The photocurable resin composition contains a component (C). The component (C) is a photoradical polymerization initiator having a molar absorption coefficient of 10 L/(mol·cm) or more at at least one wavelength (I) from 395 nm to 435 nm.

The component (C) may be, for example, an acylphosphine oxide compound, an α-aminoalkylphenone compound that satisfies the requirement of the component (C), an oxime ester compound that satisfies the requirement of the component (C), or a thioxanthone compound. The component (C) may be used singly, or in an arbitrary combination of two or more kinds thereof.

The "acylphosphine oxide compound" refers to a compound having an acylphosphine oxide structure. The "α-aminoalkylphenone compound" refers to a compound having an α-aminoalkylphenone structure. The "oxime ester compound" refers to a compound having an oxime ester structure. The "thioxanthone compound" refers to a compound having a thioxanthone structure.

Examples of the acylphosphine oxide compound include 2,4,6-trimethylbenzoyl-diphenyl-phosphine oxide (DARCUR TPO), and bis(2,4,6-trimethylbenzoyl)-phenylphosphine oxide (OMNIRAD 380 (819)).

Examples of the α-aminoalkylphenone compound that satisfies the requirement of the component (C) include 2-benzyl-2-dimethylamino-1-(4-morpholinophenyl)-butan-1-one (OMNIRAD 369), and 2-dimethylamino-2-(4-methyl-benzyl)-1-(4-morpholin-4-yl-phenyl)-butan-1-one (IRGACURE 379 and 379EG).

Examples of the oxime ester compound that satisfies the requirement of the component (C) include 1,2-octanedione,1-[4-(phenylthio)-,2-(O-benzoyloxime) (IRGACURE OXE01).

Examples of the thioxanthone compound include thioxanthone, 2-chlorothioxanthone, 2,4-diethylthioxanthone, isopropylthioxanthone, 1-chloro-4-propylthioxanthone, 3-[3,4-dimethyl-9-oxo-9H-thioxanthon-2-yl]oxy]-2-hydroxypropyl-N,N,N-trimethylammonium chloride, and fluorothioxanthone.

Of these, the component (C) preferably includes at least one selected from the group consisting of an acylphosphine oxide compound, an α-aminoalkylphenone compound that satisfies the requirement of the component (C), an oxime ester compound that satisfies the requirement of the component (C), and a thioxanthone compound. This makes it possible to allow the curing of the photocurable resin composition to proceed partially, in the irradiation step by the light irradiation (a), with a high efficiency.

The component (C) may be at least one selected from the group consisting of an acylphosphine oxide compound, an α-aminoalkylphenone compound that satisfies the requirement of the component (C), an oxime ester compound that satisfies the requirement of the component (C), and a thioxanthone compound.

The component (C) more preferably includes an acylphosphine oxide compound, and is still more preferably an acylphosphine oxide compound, from the viewpoint of further decreasing the compression set of the resulting sealing material.

The content of the component (C) is from 0.01 parts by mass to 0.9 parts by mass with respect to 100 parts by mass of the total amount of the component (A) and the component (B). The content of the component (C) is preferably from 0.05 parts by mass to 0.9 parts by mass, more preferably from 0.05 parts by mass to 0.5 parts by mass, still more preferably from 0.05 parts by mass to 0.4 parts by mass, and particularly preferably from 0.1 parts by mass to 0.4 parts by mass, from the viewpoint of further decreasing the compression set.

(1. 1. 1. 4) Component (D)

The photocurable resin composition contains a component (D). The component (D) is a photoradical polymerization initiator having a molar absorption coefficient of less than 10 L/(mol·cm) at any wavelength from 395 nm to 435 nm, and having a molar absorption coefficient of 10 L/(mol·cm) or more at the wavelength (II) which is at least one wavelength from 200 nm to 385 nm.

The component (D) may be, for example, α-hydroxyalkylphenone compound, an α-aminoalkylphenone compound that satisfies the requirement of the component (D), an oxime ester compound that satisfies the requirement of the component (D), a benzyl ketal compound, or a benzophenone compound. The component (D) may be used singly, or in an arbitrary combination of two or more kinds thereof.

The "α-hydroxyalkylphenone compound" refers to a compound having an α-hydroxyalkylphenone structure. The "benzyl ketal compound" refers to a compound having a benzyl ketal structure. The "benzophenone compound" refers to a compound having a benzophenone structure.

Examples of the α-hydroxyalkylphenone compound include 2-hydroxy-1-[4-[4-(2-hydroxy-2-methylpropionyl) benzyl]phenyl]-2-methylpropan-1-one (OMNIRAD 127D), 1-hydroxycyclohexyl phenyl ketone (OMNIRAD 184), 2-hydroxy-2-methyl-1-phenylpropan-1-one (OMNIRAD 1173), 1-[4-(2-hydroxyethoxy)phenyl]-2-hydroxy-2-methyl-1-propan-1-one (OMNIRAD 2959), and oligo[2-hydroxy-2-methyl-1-[4-1-(methylvinyl)phenyl]propanone (ESACURE ONE).

Examples of the α-aminoalkylphenone compound that satisfies the requirement of the component (D) include 2-methyl-1[4-(methylthio)phenyl]-2-morpholinopropan-1-one (IRGACURE 907).

Examples of the benzyl ketal compound include 2,2-dimethoxy-1,2-diphenylethan-1-one (OMNIRAD 651).

Examples of the oxime ester compound that satisfies the requirement of the component (D) include ethanone,1-[9-(ethyl)-6-(2-methylbenzoyl)-9H-carbazol-3-yl]-,1-(O-acetyloxime) (IRGACURE OXE02).

Examples of the benzophenone compound include benzophenone, 2-methylbenzophenone, 3-methylbenzophenone, 4-methylbenzophenone, 2,4,6-trimethylbenzophenone, 4-phenylbenzophenone, 4-(4-methylphenylthio)benzophenone, 1-[4-(4-benzoylphenylsulfanyl)phenyl]-2-methyl-2-(4-methylphenylsulfonyl)propan-1-one, 4,4'-bis(dimethylamino)benzophenone, 4,4'-bis(diethylamino)benzophenone, and 4-methoxy-4'-dimethylaminobenzophenone.

The component (D) preferably includes at least one selected from the group consisting of an α-hydroxyalkylphenone compound, a benzyl ketal compound, and a benzophenone compound. This makes it possible to allow the

curing of the photocurable resin composition to proceed sufficiently, in the irradiation step by the light irradiation (b), with a high efficiency.

The component (D) may be at least one selected from the group consisting of an α-hydroxyalkylphenone compound, a benzyl ketal compound, and a benzophenone compound.

The content of the component (D) is from 0.1 parts by mass to 5 parts by mass with respect to 100 parts by mass of the total amount of the component (A) and the component (B). The content of the component (D) is preferably from 0.2 parts by mass to 4 parts by mass, and more preferably from 0.5 parts by mass to 2 parts by mass, from the viewpoint of further decreasing the compression set.

(1. 1. 1. 5) Other Component(s)

The photocurable resin composition may contain another component as long as the effect of the present disclosure is not impaired. Examples of the other component include a thermal polymerization initiator, an ultraviolet absorber, a photostabilizer, an antioxidant, a polymerization inhibitor, a silane coupling agent, a non-reactive polymer, a filler, metal microparticles, metal oxide fine particles, an ion trapping agent, an antifoaming agent, a leveling agent, a colorant, and a pigment.

(1. 2) Molding Step

In the molding step, the photocurable resin composition is molded in the form of the sealing material to be produced.

The method of molding the photocurable resin composition can be selected as appropriate depending on the form of the sealing material, and any known method may be used.

In a case in which the sealing material is in the form of beads, the method of molding the photocurable resin composition may be, for example, a method of using a coating apparatus including a needle-shaped coating portion. The coating apparatus discharges the photocurable resin composition from the needle-shaped coating portion, and molds the photocurable resin composition in the form of beads.

In a case in which the sealing material is not in the form of beads, the method of molding the photocurable resin composition may be, for example, a method of injecting the composition into a mold. The cavity (namely, molding space) of the mold corresponds to the form of the sealing material. The configuration of the mold is not particularly limited, and the mold may have any known configuration. The material of the mold is not particularly limited as long as the mold is capable of curing the photocurable resin composition in the irradiation step, and may be, for example, glass, a resin, or a metal. The mold may include a heating means, a cooling means, a decompression means, a pressurization means and/or the like attached thereto. The method of injecting the photocurable resin composition into the mold is not particularly limited, and any known method may be used.

(1. 3) Irradiation Step

In the irradiation step, the photocurable resin composition is irradiated with light (a) including at least one wavelength (I) from 395 nm to 435 nm, and then irradiated with light (b) including at least one wavelength (II) from 200 nm to 385 nm. As a result, the photocurable resin composition is cured to provide a sealing material.

(1. 3. 1) Light Irradiation (a)

The wavelength of the light (a) can be selected as appropriate depending on the type of the component (C), the type of the component (D) and the like, as long as the light (a) includes at least one wavelength (I) from 395 nm to 435 nm. The wavelength (I) may include at least one wavelength from 395 nm to 420 nm, at least one wavelength from 400 nm to 410 nm, or 405 nm.

As the light (a), light having a maximum irradiance peak within the wavelength range of from 395 to 435 nm, in the wavelength range of from 200 to 450 nm, can be preferably used. The wavelength range in which the maximum irradiance peak appears is preferably from 395 to 420 nm, and more preferably from 400 to 410 nm.

The irradiance of the light (a) can be selected as appropriate, depending on the type of the component (C), the type of the component (D) and the like. The irradiance of the light (a) may be from 100 $mW/cm^2$ to 5,000 $mW/cm^2$, from 200 $mW/cm^2$ to 2,000 $mW/cm^2$, or from 500 $mW/cm^2$ to 1500 $mW/cm^2$.

The irradiation dose of the light (a) can be selected as appropriate, depending on the type of the component (C), the type of the component (D) and the like. The irradiation dose of the light (a) may be from 100 $mJ/cm^2$ to 5,000 $mJ/cm^2$, from 200 $mJ/cm^2$ to 4,000 $mJ/cm^2$, or from 1,000 $mJ/cm^2$ to 4,000 $mJ/cm^2$.

In the light irradiation (a), it is preferred that the wavelength is 405 nm, the irradiance is from 500 $mW/cm^2$ to 1,500

mW/cm$^2$, and the irradiation dose is from 1,000 mJ/cm$^2$ to 4,000 mJ/cm$^2$. This makes it possible to allow the curing of the photocurable resin composition to proceed partially, in a short period of time with a high efficiency.

A light source of the light irradiation (a) is preferably a light emitting diode (LED). However, it is also possible to use a multi-wavelength light source such as a low-pressure mercury lamp, a middle-pressure mercury lamp, a high-pressure mercury lamp, an ultra-high-pressure mercury lamp or a metal halide lamp, to which a wavelength cut filter is provided.

The light irradiation (a) may be performed while heating the photocurable resin composition. If necessary, the photocurable resin composition may be heated after performing the light irradiation (a).

(1. 3. 2) Light Irradiation (b)

The wavelength of the light (b) can be selected as appropriate depending on the type of the component (C), the type of the component (D) and the like, as long as the light (b) includes at least one wavelength (II) from 200 mm to 385 nm. The wavelength (II) may include at least one wavelength from 300 nm to 385 nm, at least one wavelength from 350 nm to 380 nm, or 365 nm.

As the light (b), light having a maximum irradiance peak within the wavelength range of from 200 to 385 nm, in the wavelength range of from 200 to 450 nm, can be preferably used. The wavelength range in which the maximum irradiance peak appears is preferably from 300 to 385 nm, and more preferably from 350 to 385 nm.

The irradiance of the light (b) can be selected as appropriate, depending on the type of the component (C), the type of the component (D) and the like. The irradiance of the light (a) may be from 100 mW/cm$^2$ to 5,000 mW/cm$^2$, from 200 mW/cm$^2$ to 3,000 mW/cm$^2$, or from 500 mW/cm$^2$ to 2,000 mW/cm$^2$.

The irradiation dose of the light (b) can be selected as appropriate, depending on the type of the component (C), the type of the component (D) and the like. The irradiation dose of the light (b) may be from 200 mJ/cm$^2$ to 10,000 mJ/cm$^2$, from 500 mJ/cm$^2$ to 10,000 mJ/cm$^2$, or from 2,000 mJ/cm$^2$ to 7,000 mJ/cm$^2$.

In the light irradiation (b), it is preferred that the wavelength is 365 nm, the irradiance is from 500 mW/cm$^2$ to 2,000 mW/cm$^2$, and the irradiation dose is from 2,000 mJ/cm$^2$ to 7,000 mJ/cm$^2$. This makes it possible to allow the curing of the photocurable resin composition to proceed sufficiently, in a short period of time with a high efficiency.

The light source of the light irradiation (b) is not particularly limited, and may be, for example, an LED, a low-pressure mercury lamp, a middle-pressure mercury lamp, a high-pressure mercury lamp, an ultra-high-pressure mercury lamp, a metal halide lamp, or an ultraviolet (UV) electrodeless lamp.

The light irradiation (b) may be performed continuously after performing the light irradiation (a). The light irradiation (b) may be performed while heating the photocurable resin composition. If necessary, the photocurable resin composition may be heated after performing the light irradiation (b).

(1. 3. 3) Preferred Embodiments of Light Irradiation (a) and Light Irradiation (b)

It is preferred that the light (a) has an irradiance of from 100 mW/cm$^2$ to 5,000 mW/cm$^2$, and is irradiated at an irradiation dose of from 100 mJ/cm$^2$ to 5,000 mJ/cm$^2$, and that the light (b) has an irradiance of from 100 mW/cm$^2$ to 5,000 mW/cm$^2$, and is irradiated at an irradiation dose of from 200 mJ/cm$^2$ to 10,000 mJ/cm$^2$. This makes it possible to achieve both a low compression strain and a short-time curing.

(1. 4) Sealing Material

A sealing material (hereinafter, also simply referred to as "sealing material") to be produced by the method of producing a sealing material according to the present disclosure, is suitably used, for example, for the purpose of waterproofing, water control, vibration prevention, vibration control, stress relaxation, gap filling, rattle prevention, slippage prevention, impact noise reduction, etc.

The form of the sealing material can be selected as appropriate depending on the application of the sealing material. Examples of the application include rings, packings, gaskets, diaphragms, oil seals, bearing seals, lip seals, plunger seals, door seals, lips, face seals, gas delivery plate seals, wafer support seals, and barrel seals.

The sealing material shows a low compression set in a compression set test at a high compression rate and a high temperature for a long period of time. In other words, the sealing material exhibits an excellent sealing performance at low to high temperatures over a long period of time. Therefore, the sealing material is preferably used in a fuel cell application. The fuel cell may be, for example, a polymer electrolyte fuel cell.

Hereinafter, the sealing material to be used in a fuel cell application is also referred to as "sealing material for a fuel cell".

The sealing material for a fuel cell may be in the form of, for example, an O-ring, a V-ring, a rod, a sheet, or a block.

In a fuel cell, it is important to seal a constituent member of a single cell, or to seal the gaps between constituent members of a single cell. The sealing material for a fuel cell can favorably seal the constituent member and the gaps

between the constituent members. The constituent member of a single cell may be, for example, an electrolyte membrane, an electrode, a separator, or a frame.

(2) Sealing Material

The sealing material according to the present disclosure contains a structural unit derived from the following component (A), and a structural unit derived from the following component (B). The sealing material has a compression set, determined in accordance with JIS K6262: 2013, with the proviso that the compression rate is changed to 50%, the temperature is changed to 140°C and the retention time is changed to 72 hours, of 35% or less.

Component (A): a polymer having a number average molecular weight of 1,000 or more and having two or more (meth)acryloyl groups

Component (B): a monofunctional (meth)acrylate whose homopolymer has a glass transition temperature (Tg) of 20°C or lower, which has an alkyl group having from 5 to 30 carbon atoms, and which has one (meth)acryloyl group within one molecule

Since the sealing material according to the present disclosure has the configurations described above, the sealing material shows a low compression set in a compression set test at a high compression rate and a high temperature for a long period of time.

(2. 1) Structural Unit Derived from Component (A)

The component (A) may be, for example, the same component as that exemplified as the component (A) in the section of the method of producing a sealing material according to the present disclosure described above. In particular, the polymer described above is preferably a urethane (meth)acrylate (A-1), or a (meth)acrylate (A-2) which contains a skeleton consisting of polyisobutylene, and which does not have a urethane bond. This leads to a decrease in the compression set of the sealing material.

The content of the structural unit derived from the component (A) with respect to 100 parts by mass of the total amount of the structural unit derived from the component (A) and the structural unit derived from the component (B), is not particularly limited, and is preferably from 10 parts by mass to 70 parts by mass. The content of the structural unit derived from the component (A) may be, for example, within the same range as that exemplified as the range of the content of the component (A) in the section of the method of producing a sealing material.

(2. 2) Structural Unit Derived from Component (B)

The component (B) may be, for example, the same component as that exemplified as the component (B) in the section of the method of producing a sealing material according to the present disclosure described above.

The content of the structural unit derived from the component (B) with respect to 100 parts by mass of the total amount of the structural unit derived from the component (A) and the structural unit derived from the component (B), is not particularly limited, and is preferably from 30 parts by mass to 90 parts by mass. The content of the structural unit derived from the component (B) may be, for example, within the same range as that exemplified as the range of the content of the component (B) in the section of the method of producing a sealing material.

(2. 3) Compression Set

The sealing material according to the present disclosure has a compression set of 35% or less, preferably 30% or less, and the closer to 0%, the more preferred. The method of measuring the compression set is the same as the method to be described in Examples. The method of adjusting the compression set to 35% or less may be, for example, the method of producing a sealing material according to the present disclosure described above.

The method of producing the sealing material according to the present disclosure is not particularly limited, and can be produced suitably by the method of producing a sealing material according to the present disclosure described above.

The sealing material according to the present disclosure can be used, for example, in the same applications as those exemplified as the applications of the sealing material produced by the method of producing a sealing material according to the present disclosure described above.

EXAMPLES

The present disclosure will be described below more specifically with reference to Examples. However, the present disclosure is in no way limited to the following Examples, as long as the gist of the invention is not deviated.

[1] Preparation

The following materials were prepared as the raw materials of the sealing material.

[1. 1] Component (A)

The following PUA-1, PUA-2, UN-6304 and UN-6305 were prepared each as the component (A-1). The following EP400V was prepared as the component (A-2).

[1. 1. 1] Component (A-1)

· "UN-6304": a bifunctional urethane acrylate having a polyether skeleton ("ART RESIN UN-6304" manufactured by Negami Chemical Industrial Co., Ltd., Mw: 13,000, Tg: -74°C, viscosity: 200,000 m Pa·s at 25°C)
· "UN-6305": a bifunctional urethane acrylate having a polyether skeleton ("ART RESIN UN-6305" manufactured by Negami Chemical Industrial Co., Ltd., Mw: 27,000, Tg: -74°C, viscosity: 1,600,000 m Pa·s at 25°C)
· "PUA-1": a urethane acrylate having a hydrogenated polybutadiene skeleton (a urethane acrylate component contained in the product obtained in the following Synthesis Example 1)
· "PUA-2": a urethane acrylate having a hydrogenated polyisoprene skeleton (a urethane acrylate component contained in the product obtained in the following Synthesis Example 2)

[1. 1. 2] Component (A-2)

· "EP400V": an acryloyl-terminated polyisobutylene ("KANEKA EPION EP 400V" manufactured by Kaneka Corporation, Mn = 15,000, Mw = 17,000, viscosity: 3,500,000 m Pa·s at 23°C)

[1. 2] Component (B)

The following M-120, LA and NOAA were prepared each as the component (B).

· "M-120": an acrylate of a two-mole ethylene oxide adduct of 2-ethylhexyl alcohol (ARONIX "M-120" manufactured by Toagosei Co., Ltd.), Tg: -65°C

· "LA": lauryl acrylate ("LA" manufactured by Osaka Organic Chemical Industry Ltd.), Tg: - 23°C
· "NOAA": n-octyl acrylate ("NOAA" manufactured by Osaka Organic Chemical Industry Ltd.), Tg: -65°C

[1. 3] Component (C)

The following TPO, O-380 and O-369 were prepared each as the component (C).

· "O-380": bis(2,4,6-trimethylbenzoyl)phenylphosphine oxide ("OMNIRAD 380" manufactured by IGM Resins B.V.), ε (405 nm): 515 L/(mol·cm)

· "O-369": 2-benzyl-2-dimethylamino-4'-morpholinobutyrophenone ("OMNIRAD 369" manufactured by IGM Resins B.V.), ε (405 nm): 57 L/(mol·cm)
· "TPO": 2,4,6-trimethylbenzoyl-diphenylphosphine oxide ("OMNIRAD TPO" manufactured by IGM Resins B.V.), ε (405 nm): 202 L/(mol·cm)

[1. 4] Component (D)

The following O-127D, O-184, 0-651 and E-ONE were prepared each as the component (D).

· "O-127D": 2-hydroxy-1-(4-(4-(2-hydroxy-2-methylpropionyl)benzyl)phenyl)-2-methylpropan-1-one ("OMNIRAD 127D" manufactured by IGM Resins B.V.) which has a molar absorption coefficient ε of less than 10 L/(mol·cm) at a wavelength of from 395 to 435 nm (for example, ε (405 nm): 0 L/(mol·cm), ε (365 nm): 33 L/(mol·cm))

· "O-184": 1-hydroxy-cyclohexyl-phenyl-ketone ("OMNIRAD 184" manufactured by IGM Resins B.V.) which has a molar absorption coefficient ε of less than 10 L/(mol·cm) at a wavelength of from 395 to 435 nm (for example, ε (405 nm): 0 L/(mol·cm), ε (365 nm): 18 L/(mol·cm))

· "O-651": 2,2-dimethoxy-1,2-diphenylethan-1-one ("OMNIRAD 651" manufactured by IGM Resins B.V.) which has a molar absorption coefficient ε of less than 10 L/(mol·cm) at a wavelength of from 395 to 435 nm (for example, ε (405 nm): 0 L/(mol·cm), ε (365 nm): 121 L/(mol·cm))

· "E-ONE": oligo[2-hydroxy-2-methyl-1-[4-1-(methylvinyl)phenyl]propanone ("ESACURE ONE" manufactured by IGM Resins B.V.) which has a molar absorption coefficient ε of less than 10 L/(mol·cm) at a wavelength of from 395 to 435 nm (for example, ε (405 nm): 0 L/(mol·cm), ε (365 nm): 33 L/(mol·cm))

[1. 5] Synthesis Example 1

PUA-1 (a urethane acrylate having a hydrogenated polybutadiene skeleton) as the component (A-1) was synthesized as follows.

Into a 3 L four-neck separable flask, 900 g (0.48 mol in terms of hydroxyl groups) of GI-3000 (hydroxyl value: 30.0 mg KOH/g, Mn: about 4,000) manufactured by Nippon Soda Co., Ltd. as a hydrogenated polybutadiene having hydroxyl groups, 0.71 g of 2,6-di-t-butyl-p-cresol, and 406 g of lauryl acrylate (hereinafter, referred to as "LA") were introduced. Then a stirrer was attached to the flask, and the resulting mixture was stirred and mixed to dissolve the components. Thereafter, a thermometer, a gas introduction pipe and a reflux condenser were attached to the flask, the resulting solution was stirred while allowing a mixed gas (oxygen 5%) of oxygen and nitrogen to flow through the upper portion of the solution, and 71.2 g (0.64 mol in terms of isocyanate groups) of isophorone diisocyanate was added to the solution, followed by mixing. To the resulting solution, 22 g of LA in which 0.014 g of ferric acetylacetonate had been dissolved was added and mixed, and then heating was started. After stirring and mixing the resulting solution at 80°C for one hour, 23.1 g (0.16 mol in terms of hydroxyl groups) of 4-hydroxybutyl acrylate was introduced thereto, the mixture was allowed to react for 3 hours, and the disappearance of isocyanate groups was confirmed by an IR spectrum, thereby completing the synthesis. The resulting product was a mixture containing 70% of the urethane acrylate having a hydrogenated polybutadiene skeleton (namely, "PUA-1"), and 30% of LA as a diluting monomer. As a result of analyzing the resulting product by GPC, it was possible to confirm the peaks of PUA-1 component in a manner distinguishable from the monomer component. The molecular weight of the PUA-1 component in terms of polystyrene was Mn: 16,000 and Mw: 36,000.

[1. 6] Synthesis Example 2

PUA-2 (a urethane acrylate having a hydrogenated polyisoprene skeleton) as the component (A-1) was synthesized as follows.

Into a 500 mL four-neck separable flask, 180 g (0.17 mol in terms of hydroxyl groups) of EPOL (hydroxyl value: 51.6 mg KOH/g, Mn: about 2,500) manufactured by Idemitsu Kosan Co., Ltd. as a hydrogenated polyisoprene having hydroxyl groups, 0.1 g of 2,6-di-t-butyl-p-cresol, and 88 g of n-octyl acrylate (hereinafter, referred to as "NOAA") were introduced. Then a stirrer was attached to the flask, and the resulting mixture was stirred and mixed to dissolve the components. Thereafter, a thermometer, a gas introduction pipe and a reflux condenser were attached to the flask, the resulting solution was stirred while allowing a mixed gas (oxygen 5%) of oxygen and nitrogen to flow through the upper portion of the solution, and 3 g (0.02 mol in terms of isocyanate groups) of 2-acryloyloxyethyl isocyanate ("KARENZ AOI" manufactured by Showa Denko K.K.) was added to the solution, followed by mixing. To the resulting solution, 5 g of NOAA in which 0.003 g of ferric acetylacetonate had been dissolved was added and mixed, and then heating was started. The resulting solution was stirred and mixed at 60°C for 30 minutes, and then cooled to 40°C. To the resulting solution, 24 g (0.22 mol in terms of isocyanate groups) of isophorone diisocyanate was added and mixed, and heating was started. After stirring and mixing the resulting solution at 80°C for 2 hours, 10 g (0.07 mol in terms of hydroxyl groups) of 4-hydroxybutyl acrylate was introduced thereto, the mixture was allowed to react for 7 hours, and the disappearance of isocyanate groups was confirmed by an IR spectrum, thereby completing the synthesis. The resulting product was a mixture containing 70% of the urethane acrylate having a hydrogenated polyisoprene skeleton (namely, "PUA-2"), and 30% of NOAA as a diluting monomer. As a result of analyzing the resulting product by GPC, it was possible to confirm the peaks of PUA-2 component in a manner distinguishable from the monomer component. The molecular weight of the PUA-2 component in terms of polystyrene was Mn: 11,000 and Mw: 44,000.

[2] Example 1 to Example 15 and Comparative Example 1 to Comparative Example 16

[2. 1] Preparation Step

In each of Examples and Comparative Examples, the components (A) to (D) were mixed in the proportions shown

in Table 1 to Table 4, stirred and mixed in accordance with an ordinary method, to obtain a photocurable resin composition. If necessary, the resulting photocurable resin composition was heated to about 80°C during the adjustment of the composition.

The number of parts of the component (B) include that of the component (B) contained in the product of Synthesis Example 1 or Synthesis Example 2, and indicates the total number of parts of the component (B) contained in the resulting product of Synthesis Example 1 or Synthesis Example 2 and the component (B) that has been added afterwards.

[2. 2] Molding Step, Irradiation Step, as well as Evaluation of Reaction Rate and Fast Curability

[2. 2. 1] Molding Step

A silicone frame having a thickness of 1 mm placed on a PET (polyethylene terephthalate) film was prepared. Each photocurable resin composition prepared in the section [2. 1] was poured into the silicone frame, and laminated with the PET film.

[2. 2. 2] Irradiation Step

Each photocurable resin composition poured into the silicone frame was irradiated with light (hereinafter, also referred to as "irradiation light (405 nm)") (corresponding to the light (a)) having a wavelength of 405 nm, and then irradiated with light (hereinafter, also referred to as "irradiation light (365 nm)") (corresponding to the light (b)) having a wavelength of 365 nm. By this arrangement, a cured product (hereinafter, also referred to as "first sealing material") of each photocurable resin composition was obtained. An LED (a panel-type LED irradiator, manufactured by CCS Inc.) having a wavelength of 405 nm was used as the light source of the irradiation light (405 nm). An LED (a panel-type LED irradiator, manufactured by ARKTECH Co., Ltd.) having a wavelength of 365 nm was used as the light source of the irradiation light (365 nm). An irradiance meter, C12684, manufactured by Hamamatsu Photonics K.K., was used for measuring the irradiance.

The irradiation light (405 nm) did not include light in the wavelength range of from 200 nm to 385 nm. In other words, in the light (a), the irradiation energy in the wavelength range of from 200 nm to 385 nm was equal to or less than 0.2 times (namely, 0 times) the irradiation energy in the wavelength range of from 395 nm to 435 nm.

[2. 2. 3] Evaluation of Reaction Rate

The IR spectrum of each first sealing material and the IR spectrum of each uncured photocurable resin composition were measured using an FT-IR apparatus, "SPECTRUM TWO", manufactured by Perkin Elmer Inc. The height of a peak derived from a C=O bond and the height of a peak derived from a C=C bond were calculated from each IR spectrum, and the reaction rate was calculated by the following Calculation Equation (B).

Equation (B): reaction rate (%) = {1 - ((height of peak derived from C=C bond after curing)/(height of peak derived from C=O bond after curing))/((height of peak derived from C=C bond before curing/(height of peak derived from C=O bond before curing))} $\times$ 100

In the above calculation, a peak in the vicinity of 1730 $cm^{-1}$ was used as the peak derived from a C=O bond. A peak in the vicinity of 1410 $cm^{-1}$ or 810 $cm^{-1}$ was used as the peak derived from a C=C bond.

Using the calculation result of the reaction rate, the reaction rate of each photocurable resin composition was evaluated based on the following evaluation criteria for the reaction rate. The evaluation results are shown in Table 1 to Table 4. An acceptable evaluation result for the reaction rate of the photocurable resin composition is "A1".

[2. 2. 3. 1] Evaluation Criteria for Reaction Rate

"A1": The reaction rate is 95% or more.
"B1": The reaction rate is less than 95%.

The fact that the "reaction rate was less than 95%" indicates that the curing of the photocurable resin composition did not proceed sufficiently, failing to obtain the first sealing material.

[2. 2. 4] Evaluation of Fast Curability

In each of Examples and Comparative Examples in which the reaction rate of the photocurable resin composition

was 95% or more (namely, in each of Examples and Comparative Examples in which the evaluation result was "A1"), the irradiation time of the LED having a wavelength of 405 nm and the irradiation time of the LED having a wavelength of 365 nm were added, to calculate the total irradiation time.

Using the calculated total irradiation time, the fast curability of each photocurable resin composition was evaluated based on the following evaluation criteria for the total irradiation time. The evaluation results are shown in Table 1 to Table 4. An acceptable evaluation result for the fast curability of the photocurable resin composition is "A2".

[2. 2. 4. 1] Evaluation Criteria for Fast Curability

"A2": The total irradiation time is 10 seconds or less.
"B2": The total irradiation time is more than 10 seconds.

[2. 3] Molding Step, Irradiation Step, and Measurement of Compression Set

In each of Examples and Comparative Examples in which the reaction rate of the photocurable resin composition was 95% or more (namely, in each of Examples and Comparative Examples in which the evaluation result was "A1"), the measurement of the compression set was carried out by the following method.

[2. 3. 1] Molding Step and Irradiation Step

The irradiation step was carried out in the same manner as in the section [2. 2. 2], except for changing the size of the silicone frame, to obtain a cured product (hereinafter, also referred to as "second sealing material") of each photocurable resin composition. Each second sealing material had a length of 7 mm, a width of 2 mm, and a thickness of 1 mm.

[2. 3. 2] Compression Set Test (at 50% Compression and 140°C for 72 Hours)

A compression set test was carried out, using a fixture in accordance with JIS K6262: 2013. Each second sealing material was compressed at a compression rate of 50% using the fixture, to obtain a second sealing material with the fixture. Each second sealing material with the fixture was placed in a thermostatic chamber (temperature: 140°C) and left to stand for 72 hours. Thereafter, the second sealing material with the fixture was taken out of the thermostatic chamber, the compression was released, and the second sealing material was removed from the fixture. Subsequently, the second sealing material was left to stand for 30 minutes at room temperature (25°C). Finally, the thickness of the second sealing material was measured, and the compression set (hereinafter, also referred to as "compression set (at 50% compression and 140°C for 72 hours)") was calculated.

Using the calculated compression set (at 50% compression and 140°C for 72 hours), the compression set of each sealing material was evaluated based on the following evaluation criteria for the compression set. The evaluation results are shown in Table 1 to Table 4. An acceptable range for the compression set of the sealing material is "A3+" or "A3".

[2. 3. 2. 1] Evaluation Criteria for Compression Set

"A3+": The compression set is 35% or less.
"A3": The compression set is more than 35% but equal to or less than 45%.
"B3": The compression set is more than 45%.

[2. 3. 3] Compression Set Test (at 50% Compression and 120°C for 1,000 Hours)

The compression set (hereinafter, also referred to as "compression set (at 50% compression and 120°C for 1,000 hours)") of each second sealing material was calculated in the same manner as in the section [2. 3. 2], except that each second sealing material with the fixture was placed in a thermostatic chamber (temperature: 120°C) and left to stand for 1,000 hours. The calculated values of the compression set (at 50% compression and 120°C for 1,000 hours) are shown in Table 1 to Table 4.

[2. 4] Overall Evaluation

Using the evaluation results of the fast curability and the evaluation results of the compression set, the overall evaluation for the method of producing a sealing material was carried out based on the following evaluation criteria.

[2. 4. 1] Evaluation Criteria for Method of Producing Sealing Material

"A4+": The compression set is evaluated as "A3+", and the fast curability is evaluated as "A2".
"A4": The compression set is evaluated as "A3", and the fast curability is evaluated as "A2".
"B4": The compression set is evaluated as "A3+" or "A3", and the fast curability is evaluated as "B2".
"B4-": The compression set is evaluated as "B3", or the compression set is not evaluated.

[Table 1]

| | | | Example 1 | Comparative Example 1 | Comparative Example 2 | Comparative Example 3 | Comparative Example 4 | Comparative Example 5 | Comparative Example 6 |
|---|---|---|---|---|---|---|---|---|---|
| Component (A) | UN-6305 | parts by mass | 10 | 10 | 10 | 10 | 10 | 10 | 10 |
| | UN-6304 | parts by mass | 9 | 9 | 9 | 9 | 9 | 9 | 9 |
| | PUA-1 | parts by mass | - | - | - | - | - | - | - |
| | PUA-2 | parts by mass | - | - | - | - | - | - | - |
| | EP400V | parts by mass | - | - | - | - | - | - | - |
| Component (B) | M-120 | parts by mass | 81 | 81 | 81 | 81 | 81 | 81 | 81 |
| | LA | parts by mass | - | - | - | - | - | - | - |
| | NOAA | parts by mass | - | - | - | - | - | - | - |
| Component (C) | O-380 | parts by mass | 0.5 | 0.5 | 0.5 | - | - | 1 | - |
| | TPO | parts by mass | - | - | - | - | - | - | - |
| | O-369 | parts by mass | - | - | - | - | - | - | - |
| Component (D) | O-127D | parts by mass | 0.5 | 0.5 | - | 0.5 | 0.5 | - | 1 |
| | 0-184 | parts by mass | - | - | - | - | - | - | - |
| | 0-651 | parts by mass | - | - | - | - | - | - | - |
| | E-ONE | parts by mass | - | - | - | - | - | - | - |
| Illuminance | 405 nm | mW/cm$^2$ | 750 | - | 750 | - | - | 750 | - |
| | 365 nm | mW/cm$^2$ | 750 | 750 | - | 750 | 50 | - | 750 |
| Irradiation dose | 405 nm | mJ/cm$^2$ | 1500 | - | 6000 | - | - | 4500 | - |
| | 365 nm | mJ/cm$^2$ | 3000 | 6000 | - | 6000 | 3000 | - | 7500 |
| Irradiation time | 405 nm | sec. | 2 | - | 8 | - | - | 6 | - |
| | 365 nm | sec. | 4 | 8 | - | 8 | 60 | - | 10 |
| | Total | sec. | 6 | 8 | 8 | 8 | 60 | 6 | 10 |
| Reaction rate | | % | 98 | 98 | 91 | 94 | 98 | 98 | 98 |
| Compression set | 140°C | % | 35 | 48 | - | - | 34 | 58 | 46 |
| | 120°C | % | 40 | - | - | - | - | - | - |

(continued)

| | | | Example 1 | Comparative Example 1 | Comparative Example 2 | Comparative Example 3 | Comparative Example 4 | Comparative Example 5 | Comparative Example 6 |
|---|---|---|---|---|---|---|---|---|---|
| Evaluation | Reaction rate | - | A1 | A1 | B1 | B1 | A1 | A1 | A1 |
| | Fast curability | - | A2 | A2 | - | - | B2 | A2 | A2 |
| | Compressi on set | - | A3+ | B3 | - | - | A3+ | B3 | B3 |
| | Overall | - | A4+ | B4- | B4- | B4- | B4 | B4- | B4- |

[Table 2]

| | | | Example 1 | Example 2 | Example 3 | Example 4 | Comparative Example 7 | Example 3 | Comparative Example 8 | Comparative Example 9 | Comparative Example 10 |
|---|---|---|---|---|---|---|---|---|---|---|---|
| Component (A) | UN-6305 | parts by mass | 10 | 10 | 10 | 10 | 10 | 10 | 10 | 10 | 10 |
| | UN-6304 | parts by mass | 9 | 9 | 9 | 9 | 9 | 9 | 9 | 9 | 9 |
| | PUA-1 | parts by mass | - | - | - | - | - | - | - | - | - |
| | PUA-2 | parts by mass | - | - | - | - | - | - | - | - | - |
| | EP400V | parts by mass | - | - | - | - | - | - | - | - | - |
| Component (B) | M-120 | parts by mass | 81 | 81 | 81 | 81 | 81 | 81 | 81 | 81 | 81 |
| | LA | parts by | - | - | - | - | - | - | - | - | - |
| | | mass | | | | | | | | | |
| | NOAA | parts by mass | - | - | - | - | - | - | - | - | - |
| Component (C) | O-380 | parts by mass | 0.5 | 0.25 | 0.1 | 0.05 | 1 | 0.1 | 0.1 | 0.1 | 0.1 |
| | TPO | parts by mass | - | - | - | - | - | - | - | - | - |
| | O-369 | parts by mass | - | - | - | - | - | - | - | - | - |

(continued)

| | | | Example 1 | Example 2 | Example 3 | Example 4 | Comparative Example 7 | Example 3 | Comparative Example 8 | Comparative Example 9 | Comparative Example 10 |
|---|---|---|---|---|---|---|---|---|---|---|---|
| Component (D) | O-127D | parts by mass | 0.5 | 0.5 | 0.5 | 0.5 | 0.5 | 0.5 | 0.5 | - | - |
| | 0-184 | parts by mass | - | - | - | - | - | - | - | - | - |
| | 0-651 | parts by mass | - | - | - | - | - | - | - | - | - |
| | E-ONE | parts by mass | - | - | - | - | - | - | - | - | - |
| Illuminance | 405 nm | $mW/cm^2$ | 750 | 750 | 750 | 750 | 750 | 750 | - | 750 | 30 |
| | 365 nm | $mW/cm^2$ | 750 | 750 | 750 | 750 | 750 | 750 | 750 | - | - |
| Irradiation | 405 nm | $mJ/cm^2$ | 1500 | 1500 | 1500 | 1500 | 1500 | 1500 | - | 3000 | 3000 |
| dose | 365 nm | $mJ/cm^2$ | 3000 | 4500 | 6000 | 6000 | 3000 | 6000 | 9000 | - | - |
| Irradiation time | 405 nm | sec. | 2 | 2 | 2 | 2 | 2 | 2 | - | 4 | 100 |
| | 365 nm | sec. | 4 | 6 | 8 | 8 | 4 | 8 | 12 | - | - |
| | Total | sec. | 6 | 8 | 10 | 10 | 6 | 10 | 12 | 4 | 100 |
| Reaction rate | | % | 98 | 97 | 97 | 96 | 98 | 97 | 96 | 55 | 99 |
| Compression set | 140°C | % | 35 | 26 | 27 | 36 | 51 | 27 | 39 | - | 24 |
| | 120°C | % | 40 | - | 31 | - | 62 | 31 | - | - | - |
| Evaluation | Reaction rate | - | A1 | A1 | A1 | A1 | A1 | A1 | A1 | B1 | A1 |
| | Fast curabilit y | - | A2 | A2 | A2 | A2 | A2 | A2 | B2 | - | B2 |
| | Compres sion set | - | A3+ | A3+ | A3+ | A3 | B3 | A3+ | A3 | - | A3+ |
| | Overall | - | A4+ | A4+ | A4+ | A4 | B4- | A4+ | B4 | B4- | B4 |

[Table 3]

| | | | Example 3 | Example 5 | Example 6 | Example 3 | Example 7 | Example 8 | Example 9 | Example 10 | Comparative Example 11 | Comparative Example 12 |
|---|---|---|---|---|---|---|---|---|---|---|---|---|
| Component (A) | UN-6305 | parts by mass | 10 | 10 | 10 | 10 | 10 | 10 | 10 | 10 | 10 | 10 |
| | UN-6304 | parts by mass | 9 | 9 | 9 | 9 | 9 | 9 | 9 | 9 | 9 | 9 |
| | PUA-1 | parts by mass | - | - | - | - | - | - | - | - | - | - |
| | PUA-2 | parts by mass | - | - | - | - | - | - | - | - | - | - |
| | EP400V | parts by mass | - | - | - | - | - | - | - | - | - | - |
| Component (B) | M-120 | parts by mass | 81 | 81 | 81 | 81 | 81 | 81 | 81 | 81 | 81 | 81 |
| | LA | parts by mass | - | - | - | - | - | - | - | - | - | - |
| | NOAA | parts by mass | - | - | - | - | - | - | - | - | - | - |
| Component (C) | O-380 | parts by mass | 0.1 | - | - | 0.1 | 0.1 | 0.1 | 0.1 | 0.1 | 0.1 | 0.1 |
| | TPO | parts by | - | 0.1 | - | - | - | - | - | - | - | - |
| | | mass | | | | | | | | | | |
| | O-369 | parts by mass | - | - | 0.1 | - | - | - | - | - | - | - |

(continued)

| | | | Example 3 | Example 5 | Example 6 | Example 3 | Example 7 | Example 8 | Example 9 | Example 10 | Comparative Example 11 | Comparative Example 12 |
|---|---|---|---|---|---|---|---|---|---|---|---|---|
| Component (D) | O-127D | parts by mass | 0.5 | 0.5 | 0.5 | 0.5 | 0.2 | 1 | 2 | 4 | 8 | 10 |
| | 0-184 | parts by mass | - | - | - | - | - | - | - | - | - | - |
| | 0-651 | parts by mass | - | - | - | - | - | - | - | - | - | - |
| | E-ONE | parts by mass | - | - | - | - | - | - | - | - | - | - |
| Illuminance | 405 nm | $mW/cm^2$ | 750 | 750 | 750 | 750 | 750 | 750 | 750 | 750 | 750 | 750 |
| | 365 nm | $mW/cm^2$ | 750 | 750 | 750 | 750 | 750 | 750 | 750 | 750 | 750 | 750 |
| Irradiation dose | 405 nm | $mJ/cm^2$ | 1500 | 1500 | 3000 | 1500 | 1500 | 1500 | 1500 | 1500 | 1500 | 1500 |
| | 365 nm | $mJ/cm^2$ | 6000 | 6000 | 4500 | 6000 | 6000 | 3000 | 3000 | 3000 | 3000 | 3000 |
| Irradiation time | 405 nm | sec. | 2 | 2 | 4 | 2 | 2 | 2 | 2 | 2 | 2 | 2 |
| | 365 nm | sec. | 8 | 8 | 6 | 8 | 8 | 4 | 4 | 4 | 4 | 4 |
| | Total | sec. | 10 | 10 | 10 | 10 | 10 | 6 | 6 | 6 | 6 | 6 |
| Reaction rate | | % | 97 | 96 | 97 | 97 | 97 | 98 | 98 | 98 | 98 | 98 |
| Compression set | 140°C | % | 27 | 33 | 43 | 27 | 36 | 25 | 32 | 39 | 46 | 52 |
| | 120°C | % | 31 | 40 | - | 31 | - | - | - | - | - | - |
| Evaluation | Reaction rate | - | A1 | A1 | A1 | A1 | A1 | A1 | A1 | A1 | A1 | A1 |
| | Fast curability | - | A2 | A2 | A2 | A2 | A2 | A2 | A2 | A2 | A2 | A2 |
| | Compression set | - | A3+ | A3+ | A3 | A3+ | A3 | A3+ | A3+ | A3 | B3 | B3 |
| | Overall | - | A4+ | A4+ | A4 | A4+ | A4 | A4+ | A4+ | A4 | B4- | B4- |

[Table 4]

| | | | Example 3 | Example 11 | Example 12 | Example 13 | Comparative Example 13 | Comparative Example 14 | Comparative Example 15 | Example 14 | Example 15 | Comparative Example 16 |
|---|---|---|---|---|---|---|---|---|---|---|---|---|
| Component (A) | UN-6305 | parts by mass | 10 | 10 | 10 | - | - | - | - | - | - | - |
| | UN-6304 | parts by mass | 9 | 9 | 9 | - | - | - | - | - | - | - |
| | PUA-1 | parts by mass | - | - | - | 50 | 50 | 50 | 50 | - | - | - |
| | PUA-2 | parts by mass | - | - | - | - | - | - | - | 30 | - | - |
| | EP400 V | parts by mass | - | - | - | - | - | - | - | - | 50 | 50 |
| Component (B) | M-120 | parts by mass | 81 | 81 | 81 | - | - | - | - | 57 | - | - |
| | LA | parts by mass | - | - | - | 50 | 50 | 50 | 50 | - | - | - |
| | NOAA | parts by mass | - | - | - | - | - | - | - | 13 | 50 | 50 |
| Component (C) | O-380 | parts by mass | 0.1 | 0.1 | 0.1 | - | - | - | - | - | 0.1 | - |
| | TPO | parts by mass | - | - | - | 0.1 | - | 0.1 | 1 | 0.1 | - | - |
| | O-369 | parts by mass | - | - | - | - | - | - | - | - | - | - |
| Component (D) | O-127D | parts by mass | 0.5 | - | - | 1 | 1 | - | - | 1 | - | - |
| | 0-184 | parts by mass | - | 0.5 | - | - | - | - | - | - | - | - |

(continued)

| | | | Example 3 | Example 11 | Example 12 | Example 13 | Comparative Example 13 | Comparative Example 14 | Comparative Example 15 | Example 14 | Example 15 | Comparative Example 16 |
|---|---|---|---|---|---|---|---|---|---|---|---|---|
| | 0-651 | parts by mass | - | - | 0.5 | - | - | - | - | - | - | - |
| | E-ONE | parts by mass | - | - | - | - | - | - | - | - | 1 | 1 |
| Illuminance | 405 nm | $mW/cm^2$ | 750 | 750 | 750 | 750 | - | 30 | 750 | 750 | 750 | - |
| | 365 nm | $mW/cm^2$ | 750 | 750 | 750 | 750 | 750 | - | - | 750 | 750 | 750 |
| Irradiation dose | 405 nm | $mJ/cm^2$ | 1500 | 1500 | 1500 | 1500 | - | 3000 | 6000 | 1500 | 1500 | - |
| | 365 nm | $mJ/cm^2$ | 6000 | 6000 | 6000 | 4500 | 4500 | - | - | 6000 | 4500 | 7500 |
| Irradiation time | 405 nm | sec. | 2 | 2 | 2 | 2 | - | 100 | 8 | 2 | 2 | - |
| | 365 nm | sec. | 8 | 8 | 8 | 6 | 6 | - | - | 8 | 6 | 10 |
| | Total | sec. | 10 | 10 | 10 | 8 | 6 | 100 | 8 | 10 | 8 | 10 |
| Reaction rate | | % | 97 | 96 | 95 | 99 | 97 | 94 | 98 | 98 | 98 | 98 |
| Compression set | 140°C | % | 27 | 38 | 35 | 30 | 100 | - | 68 | 24 | 7 | 84 |
| | 120°C | % | 31 | - | - | - | - | - | - | - | - | - |
| Evaluation | Reaction rate | - | A1 | A1 | A1 | A1 | A1 | B1 | A1 | A1 | A1 | A1 |
| | Fast curability | - | A2 | A2 | A2 | A2 | A2 | - | A2 | A2 | A2 | A2 |
| | Compression set | - | A3+ | A3 | A3+ | A3+ | B3 | - | B3 | A3+ | A3+ | B3 |
| | Overall | - | A4+ | A4 | A4+ | A4+ | B4- | B4- | B4- | A4+ | A4+ | B4- |

[3] Results

Comparative Examples 1 to 16

In Comparative Examples 1 and 8, the light irradiation (a) was not performed. In Comparative Examples 2, 5, 9, 10, 14 and 15, each photocurable resin composition did not contain the component (D), and the light irradiation (b) was not performed. In Comparative Example 3, 4, 6, 13 and 16, each photocurable resin composition did not contain the component (C), and the light irradiation (a) was not performed. In Comparative Example 7, the content of the component (C) was not from 0.01 parts by mass to 0.9 parts by mass. In Comparative Examples 11 and 12, the content of the component (D) was not from 0.1 parts by mass to 5 parts by mass. Therefore, the overall evaluations of Comparative Examples 1 to 16 were "B4" or "B4-". These results have revealed that the method of producing a sealing material in each of Comparative Examples 1 to 16 was not a method of producing a sealing material, which method is capable of producing a sealing material that shows a low compression set in a compression set test at a high compression rate and a high temperature for a long period of time, by curing for a short period of time.

[3. 2] Examples 1 to 15

The method of producing a sealing material in Example 1 to Example 15 included the irradiation step in which the light irradiation (a) and the light irradiation (b) were performed. Each photocurable resin composition contained the components (A) to (D) in specific proportions. Therefore, the overall evaluations of Examples 1 to 15 were "A4+" or "A4". These results have revealed that the method of producing a sealing material in each of Examples 1 to 15 was a method of producing a sealing material, which method is capable of producing a sealing material that shows a low compression set in a compression set test at a high compression rate and a high temperature for a long period of time, by curing for a short period of time.

[3. 3] Comparison of Example 1 with Comparative Examples 1 to 6

In Comparative Example 1, the photocurable resin composition was the same as that in Example 1, but the light irradiation (a) was not performed. The compression set in Comparative Example 1 was not sufficient.

In Comparative Examples 2 to 4, each photocurable resin composition contained either the component (C) or the component (D), and the content of either the component (C) or the component (D) was the same as the content (0.5 parts by mass) thereof in Example 1. In Comparative Examples 2 and 3, the irradiance was the same as the irradiance (750 $mW/cm^2$) in Example 1, but the reaction rate was not sufficient. In Comparative Example 4, the reaction rate was sufficiently increased when the irradiance was low (50 $mW/cm^2$), and the compression set was about the same level as that in Example 1. However, the fast curability was not sufficient.

In Comparative Examples 5 and 6, each photocurable resin composition contained either the component (C) or the component (D), and the content of the component (C) or the component (D) was the same as the total (1 part by mass) of the content of the component (C) and the content of the component (D) in Example 1. In Comparative Examples 5 and 6, the irradiance was the same as the irradiance (750 $mW/cm^2$) in Example 1, and the reaction rate was sufficient. However, the compression set was not sufficient.

[3. 4] Comparison of Examples 1 to 4 with Comparative Example 7

In Examples 2 and 3, the content of the component (C) was lower than that in Example 1, and the compression set was lower than that in Example 1. In Example 4, the content of the component (C) was lower than that in Examples 2 and 3, and the compression set was higher than that in Example 1.

In Comparative Example 7, the content of the component (C) was high, and the compression set was not sufficient.

The comparison of Example 1 with Example 3 have shown that, when the compression set (compression rate: 50%, temperature: 140°C, retention time: 72 hours) was favorable, the compression set (compression rate: 50%, temperature: 120°C, retention time: 1,000 hours) was also favorable.

[3. 5] Comparison of Example 3 with Comparative Examples 8 to 10

In Comparative Example 8, the photocurable resin composition was the same as that in Example 3, but the light irradiation (a) was not performed. In Comparative Example 8, the compression set was worse than that in Example 3, and the fast curability was not sufficient.

In Comparative Examples 9 and 10, each photocurable resin composition did not contain the component (D), and

the content of the component (C) was the same as the content (0.1 parts by mass) in Example 3 which is relatively low. In Comparative Example 9, the irradiance was the same as the irradiance (750 mW/$cm^2$) in Example 3, but the reaction rate was not sufficient. In Comparative Example 10, the irradiance was low (30 mW/$cm^2$), and the reaction rate and the compression set were about the same level as those in Example 3. However, the fast curability was not sufficient.

[3. 6] Comparison of Example 3 with Examples 5 and 6

"TPO" (Example 5), which an acylphosphine oxide compound as with "OMNIRAD 380", and "OMNIRAD 369" (Example 6), which is an α-aminoalkylphenone compound, were examined, as the component (C). The compression set was sufficient in both Examples 5 and 6. The compression set was better in Examples 3 and 5 (acylphosphine oxide compounds).

[3. 7] Comparison of Example 3, with Examples 7 to 10, and Comparative Examples 11 and 12

Each case in which the content of the component (D) is higher than 0.5 parts by mass was examined. When the content of the component (D) is 2 parts by mass or more, the compression set increased as the content of the component (D) increased (Examples 8, 9 and 10 as well as Comparative Examples 11 and 12). When the content of the component (D) is 0.2 parts by mass, the compression set was higher than that in Example 3 (Example 7).

[3. 8] Comparison of Example 3 with Examples 11 and 12

"OMNIRAD 184" (Example 11), which is an α-hydroxyalkylphenone compound as with "OMNIRAD 127D", and "OMNIRAD 651" (Example 12), which is a benzyl ketal compound, were examined, as the component (D). The compression set was evaluated as sufficient.

[3. 9] Comparison of Example 13, with Example 14 and Comparative Examples 13 to 15

The urethane acrylate having a hydrogenated polybutadiene skeleton as the component (A), and lauryl acrylate, which is an alkyl acrylate, as the component (B) were examined. As with the cases of using the urethane acrylates having a polyether skeleton described so far, in a case in which the photocurable resin composition contained the component (C) and the component (D) in specific proportions, and the irradiation step including the light irradiation (a) and the light irradiation (b) was performed, the compression set was favorable (Example 13). In contrast, in a case in which the photocurable resin composition contained either the component (C) or the component (D), and the irradiation step including either the light irradiation (a) or the light irradiation (b) was performed, the reaction rate was not sufficient, or the reaction rate was sufficient but the compression set was not sufficient (Comparative Examples 13 to 15). When the urethane acrylate having a hydrogenated isoprene skeleton was examined as the component (A), the compression set was sufficient (Example 14).

[3. 10] Comparison of Example 15 with Comparative Example 16

Polyisobutylene diacrylate as the component (A), and n-octyl acrylate, which is an alkyl acrylate, as the component (B) were examined. As with the cases of using the urethane acrylates described so far, in a case in which the photocurable resin composition contained the component (C) and the component (D) in specific proportions, and the irradiation step including the light irradiation (a) and the light irradiation (b) was performed, the compression set was favorable (Example 15). In contrast, in a case in which the photocurable resin composition contained only the component (D), and the irradiation step including only the light irradiation (b) was performed, the reaction rate was sufficient, but the compression set was not sufficient (Comparative Example 16).

The disclosures of Japanese Patent Application No. 2023-097316 filed on Jun. 13, 2023 and Japanese Patent Application No. 2023-207953 filed on Dec. 8, 2023 are incorporated herein by reference in their entirety. All publications, patent applications, and technical standards mentioned in the present specification are incorporated herein by reference to the same extent as if each individual publication, patent application, or technical standard was specifically and individually indicated to be incorporated by reference.

## Claims

**1.** A method of producing a sealing material, comprising a step of irradiating a photocurable resin composition with light (a) comprising at least one wavelength (I) from 395 nm to 435 nm, and then irradiating the composition with light (b)

comprising at least one wavelength (II) from 200 nm to 385 nm,

wherein, in the light (a), an irradiation energy in a wavelength range of from 200 nm to 385 nm is equal to or less than 0.2 times an irradiation energy in a wavelength range of from 395 nm to 435 nm,
wherein the photocurable resin composition comprises the following components (A) to (D):

component (A): a polymer having a number average molecular weight of 1,000 or more and having two or more (meth)acryloyl groups,
component (B): a monofunctional (meth)acrylate whose homopolymer has a glass transition temperature (Tg) of 20°C or lower, which has an alkyl group having from 5 to 30 carbon atoms, and which has one (meth)acryloyl group within one molecule,
component (C): a photoradical polymerization initiator having a molar absorption coefficient of 10 L/(mol·cm) or more at the wavelength (I), and
component (D): a photoradical polymerization initiator having a molar absorption coefficient of less than 10 L/(mol·cm) at any wavelength from 395 nm to 435 nm, and having a molar absorption coefficient of 10 L/(mol·cm) or more at the wavelength (II), and

wherein a content of the component (A) is from 10 parts by mass to 70 parts by mass, a content of the component (B) is from 30 parts by mass to 90 parts by mass, a content of the component (C) is from 0.01 parts by mass to 0.9 parts by mass and a content of the component (D) is from 0.1 parts by mass to 5 parts by mass, with respect to 100 parts by mass of a total amount of the component (A) and the component (B).

**2.** The method of producing a sealing material according to claim 1,

wherein the light (a) has an irradiance of from 100 $mW/cm^2$ to 5,000 $mW/cm^2$, and is irradiated at an irradiation dose of from 100 $mJ/cm^2$ to 5,000 $mJ/cm^2$, and
wherein the light (b) has an irradiance of from 100 $mW/cm^2$ to 5,000 $mW/cm^2$, and is irradiated at an irradiation dose of from 200 $mJ/cm^2$ to 10,000 $mJ/cm^2$.

**3.** The method of producing a sealing material according to claim 1 or claim 2, wherein the polymer is:

a urethane (meth)acrylate (A-1); or
a (meth)acrylate (A-2) which comprises a skeleton comprising polyisobutylene, and which does not have a urethane bond.

**4.** The method of producing a sealing material according to claim 3,

wherein the polymer is the urethane (meth)acrylate (A-1), and
wherein the urethane (meth)acrylate (A-1) comprises a skeleton consisting of at least one of a hydrogenated polybutadiene or a hydrogenated polyisoprene.

**5.** The method of producing a sealing material according to claim 3, wherein the polymer is the (meth)acrylate (A-2).

**6.** The method of producing a sealing material according to claim 1 or claim 2, wherein the component (C) comprises at least one selected from the group consisting of an acylphosphine oxide compound, an $\alpha$-aminoalkylphenone compound, an oxime ester compound, and a thioxanthone compound.

**7.** The method of producing a sealing material according to claim 6, wherein the component (D) comprises at least one selected from the group consisting of an $\alpha$-hydroxyalkylphenone compound, a benzyl ketal compound, and a benzophenone compound.

**8.** The method of producing a sealing material according to claim 7, wherein the sealing material is used in a fuel cell application.

**9.** A sealing material, comprising a structural unit derived from the following component (A), and a structural unit derived from the following component (B):

component (A): a polymer having a number average molecular weight of 1,000 or more and having two or more

(meth)acryloyl groups, and
component (B): a monofunctional (meth)acrylate whose homopolymer has a glass transition temperature (Tg) of 20°C or lower, which has an alkyl group having from 5 to 30 carbon atoms, and which has one (meth)acryloyl group within one molecule,

wherein the sealing material has a compression set, determined in accordance with JIS K6262: 2013, with the proviso that a compression rate is changed to 50%, a temperature is changed to 140°C and a retention time is changed to 72 hours, of 35% or less.

**10.** The sealing material according to claim 9, wherein the polymer is:

a urethane (meth)acrylate (A-1); or
a (meth)acrylate (A-2) which comprises a skeleton comprising polyisobutylene, and which does not have a urethane bond.

## INTERNATIONAL SEARCH REPORT

International application No.
**PCT/JP2024/021043**

**A. CLASSIFICATION OF SUBJECT MATTER**

***C09K 3/10***(2006.01)i; ***C08F 2/50***(2006.01)i; ***C08F 290/04***(2006.01)i; ***C08F 290/06***(2006.01)i; ***F16J 15/10***(2006.01)i
FI: C09K3/10 E; C08F290/06; C08F2/50; C08F290/04; F16J15/10 X; C09K3/10 D

According to International Patent Classification (IPC) or to both national classification and IPC

**B. FIELDS SEARCHED**

Minimum documentation searched (classification system followed by classification symbols)

C09K3/10; C08F2/50; C08F290/04; C08F290/06; F16J15/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/090088 A1 (THREEBOND CO., LTD.) 25 May 2023 (2023-05-25) claims, paragraphs [0025], [0028], [0039], [0099], [0102], [0105], [0121], examples | 9-10 |
| A | claims, paragraphs [0025], [0028], [0039], [0099], [0102], [0105], [0121], examples | 1-8 |
| A | JP 2022-000502 A (THREEBOND CO., LTD.) 04 January 2022 (2022-01-04) entire text, all drawings | 1-10 |
| A | JP 2020-199437 A (TOAGOSEI CO., LTD.) 17 December 2020 (2020-12-17) entire text, all drawings | 1-10 |
| A | JP 2001-510404 A (BLUM, Ronald D.) 31 July 2001 (2001-07-31) entire text, all drawings | 1-10 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/021043**

| Patent document cited in search report | Publication date (day/month/year) | Patent family member(s) | Publication date (day/month/year) |
|---|---|---|---|
| WO 2023/090088 A1 | 25 May 2023 | (Family: none) | |
| JP 2022-000502 A | 04 January 2022 | US 2021/0399316 A1<br>entire text, all drawings<br>EP 3926721 A1<br>CN 113801582 A | |
| JP 2020-199437 A | 17 December 2020 | (Family: none) | |
| JP 2001-510404 A | 31 July 2001 | WO 1997/009170 A1<br>entire text, all drawings<br>EP 847330 A1<br>AU 6963596 A<br>IL 123478 D<br>CA 2230646 A<br>CN 1200696 A<br>MX 9801691 A<br>BR 9610409 A<br>KR 10-1999-0044298 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021021012 A
- JP 2022057075 A
- JP 2017122139 A
- JP 2022024078 A
- WO 2020137658 A
- WO 2016194870 A
- JP 2005285537 A
- JP 2023097316 A
- JP 2023207953 A